# EUROPÄISCHE PATENTANMELDUNG

(11) **EP 1 205 445 A2**
(43) Veröffentlichungstag der Anmeldung: **15.05.2002**
(21) Anmeldenummer: 01124738.4
(22) Anmeldetag: 17.10.2001
(51) Int. Cl.: C03B 5/225

(54) **Verfahren und Vorrichtung zur Läuterung einer Glasschmelze unter vermindertem Druck**

(30) Priorität: 11.11.2000 DE 10055969
(71) Anmelder: Schott Glas, 55122 Mainz (DE); CARL-ZEISS-STIFTUNG trading as Schott Glas, 55122 Mainz (DE)
(72) Erfinder: Schmitt, Stefan, 55271 Stadecken-Elsheim (DE); Karetta, Frank, Dr., 67596 Dittelsheim-Hessloch (DE); Eichholz, Rainer, 55122 Mainz (DE)
(74) Vertreter: Fleck, Hermann-Josef, Dr.-Ing.

(57) **Zusammenfassung**

Die Erfindung betrifft ein Verfahren zur Läuterung einer Glasschmelze mittels eines über der Oberfläche eines Glasflusses erzeugten Vakuums und eine Vorrichtung zur Durchführung des Verfahrens. Die Läuterung wird dadurch verbessert, dass der Glasfluss nacheinander durch mehrere Vakuumkammern geleitet wird und dass der Druck in den aufeinander folgenden Vakuumkammern gegenüber dem atmosphärischen Druck mehr und mehr reduziert wird.

## Beschreibung

Die Erfindung betrifft ein Verfahren zur Läuterung einer Glasschmelze mittels eines über der Oberfläche eines Glasflusses erzeugten Vakuums.

Es sind im Wesentlichen zwei unterschiedliche Verfahren zur Läuterung einer Glasschmelze bekannt, die mit gegenüber dem atmosphärischen Druck reduzierten Druck über dem Glasfluss arbeiten.

Bei dem ersten Verfahren wird der Glasfluss von oben in einen Behälter eingebracht, in dem ein reduzierter Druck herrscht. Das Glas expandiert dabei aufgrund der schlagartigen Druckänderung unter Bildung eines Schaumvolumens. Durch Zersetzung des Schaumes entsteht im weiteren Verlauf des Verfahrens wieder eine Glasschmelze, jedoch mit deutlich reduziertem Gehalt an Gasen und gelösten Blasen gegenüber der dem Behälter zugeführten Glasschmelze. Ein derartiges Verfahren zeigen die EP 0 231 518 B1 und die EP 0 253 188 A1.

Das zweite Verfahren verwendet einen portalartigen Unterdruck-Apparat, wie die US 1,598,308 und die EP 0 908 417 zeigen. Dabei steigt der Glasfluss über ein vertikales Steigrohr hoch in eine horizontale Läuterbank. Das Vakuum wird über dem Glasfluss der Läuterbank erzeugt. Der geläuterte Glasfluss fließt über ein vertikales Fallrohr aus dem Unterdruck-Apparat ab. Auch bei diesem Verfahren kommt es zu einer starken Schaumbildung, insbesondere über der Zuführung des Steigrohres zur Läuterbank und über der Oberfläche des Glasflusses in der Läuterbank im weiteren Verlauf in Richtung Fallrohr.

Bei beiden Verfahren kann nicht ausgeschlossen werden, dass aufgrund der vorhandenen Glasdurchsatzströmungen wieder Schaum in den Glasfluss eingebracht wird. Es besteht daher eine erhebliche Gefahr, dass Schaum oder einzelne Blasen aus Schaumresten wieder in das Produkt gelangen und zu Ausbeuteverlusten oder verminderter Qualität des Produktes führen. Es hat daher nicht an Versuchen gefehlt, dies zu verhindern.

Bei dem Verfahren mit dem Behälter ist schon versucht worden, durch den Einsatz von Sauerstoff- oder Plasmabrennern sowie die Verbrennung von Öl mit erhöhtem Wasseranteil die Schaumbildung besser unter Kontrolle zu bringen, wie die US 4,704,153 zeigt.

Verfahren mit portalartigen Unterdruck-Apparaten sehen Schaumbarrieren in der Läuterbank vor, die den entstehenden Schaumteppich in der Läuterbank daraus hindern, bis zum Fallrohr vorzudringen, wie die EP 0 775 671 A1 zeigt.

Es hat sich jedoch gezeigt, dass diese zusätzlichen Maßnahmen je nach Glaszusammensetzung nicht immer zu einer ausreichenden Läuterung der Glasschmelze führen.

Es ist Aufgabe der Erfindung, ein Verfahren der eingangs erwähnten Art zu schaffen, das eine verbesserte Läuterung bringt und effizienter an die verwendete Glaszusammensetzung angepasst werden kann.

Das erfindungsgemäße Verfahren ist dadurch gekennzeichnet, dass der Glasfluss nacheinander durch mehrere Vakuumkammern geleitet wird und dass der Druck in den aufeinander folgenden Vakuumkammern gegenüber dem atmosphärischen Druck mehr und mehr reduziert wird.

Die stufenweise Reduzierung des Druckes in den Vakuumkammern bringt eine verbesserte Läuterung, wobei in der ersten Stufe eine Reduzierung auf einen Druck bis etwa 100 mbar unterhalb des Druckes vorgenommen wird, bei dem eine erste Schaumbildung einsetzt. Damit wird in der ersten Stufe das größte Schaumvolumen erzeugt. Dieser Druck der ersten Stufe liegt in einem Bereich von 600 bis 300 mbar. In der zweiten und den folgenden Stufen wird der Druck so gewählt, dass das beste Läuterungsergebnis erreicht wird.

Der Bereich, insbesondere der Endstufe, liegt dabei zwischen etwa 300 bis 30 mbar. Der aus der ersten Stufe verschleppte Schaum wird in den folgenden Stufen beseitigt. Vielfach reichen zwei Stufen aus, um eine wesentlich effizientere Läuterung zu erreichen, da in diesen Stufen das anfallende Schaumvolumen wesentlich kleiner ist. Dadurch wird auch die Gefahr der Verschleppung von Schaum oder Schaumrelikten bis zum Produkt minimiert oder praktisch verhindert.

Eine erste Vorrichtung zur Durchführung des Verfahrens nach der Erfindung ist dadurch gekennzeichnet, dass die Vakuumkammern als horizontale Läuterbank ausgebildet sind, wobei der ersten Vakuumkammer der Glasfluss aus einem Eingangs-Becken über ein Eingangs-Steigrohr zuführbar ist, dass die jeweils folgende Vakuumkammer über ein an das Ende der vorhergehenden Läuterbank anschließendes Zwischen-Steigrohr mit dem ankommenden Glasfluss versorgt ist und dass die letzte Vakuumkammer den Glasfluss über ein Fallrohr einem Ausgangs-Becken zuführt.

Bei dieser Vorrichtung wird mit einem erweiterten portalartigen Unterdruck-Apparat oder mit mehreren, hintereinander vom Glasfluss durchflossenen Läuterbänken gearbeitet. Dabei lässt sich die Verschleppung von Schaum oder Schaumrelikten dadurch auf einfache Weise noch reduzieren, dass die in Strömungsrichtung des Glasflusses vordere Wand des Zwischen-Steigrohrs zu einer nachfolgenden Vakuumkammer teilweise in den Glasfluss der vorangehenden Läuterbank ragt.

Eine zweite Vorrichtung zur Durchführung des Verfahrens nach der Erfindung ist dadurch gekennzeichnet, dass die Vakuumkammern in einem Mehrkammergehäuse vertikal übereinander angeordnet sind, dass der Glasfluss über einen Deckeneinlass der obersten Vakuumkammer zuführbar ist und über einen Bodenauslass in die nachfolgende Vakuumkammer eintritt, dass der geläuterte Glasfluss über einen Bodenauslass der untersten Vakuumkammer austritt und dass jede Vakuumkammer über dem aufgenommenen Glasfluss mit einer individuellen Vakuumpumpe verbunden ist.

Der Behälter ist als Mehrkammerbehälter ausgebildet, wobei der Glasfluss die Vakuumkammern nacheinander durchfließt und unterschiedlichen Drücken ausgesetzt wird, so dass ebenfalls von Stufe zu Stufe die Schaumbildung reduziert und die Läuterung verbessert wird. Für die Erzeugung der unterschiedlichen Drücke in den Vakuumkammern ist vorgesehen, dass die Vakuumkammern in den Seitenwänden des Mehrkammergehäuses mit Anschlussöffnungen für die Vakuumpumpen versehen sind.

Aus konstruktiven und wärmetechnischen Gesichtspunkten hat sich eine Ausgestaltung als vorteilhaft erwiesen, die dadurch gekennzeichnet ist, dass die Vakuumkammern zu einer Baueinheit zusammengefasst sind.

Die Erfindung wird anhand von zwei in den Zeichnungen im Schnitt dargestellten Ausführungsbeispielen näher erläutert. Es zeigen:
- Fig. 1: ein erstes Ausführungsbeispiel einer Vorrichtung zur Durchführung des erfindungsgemäßen Verfahrens mit zwei nacheinander wirkenden Läuterbänken und
- Fig. 2: ein zweites Ausführungsbeispiel einer Vorrichtung zur Durchführung des erfindungsgemäßen Verfahrens mit einem Behälter mit zwei Vakuumkammern.

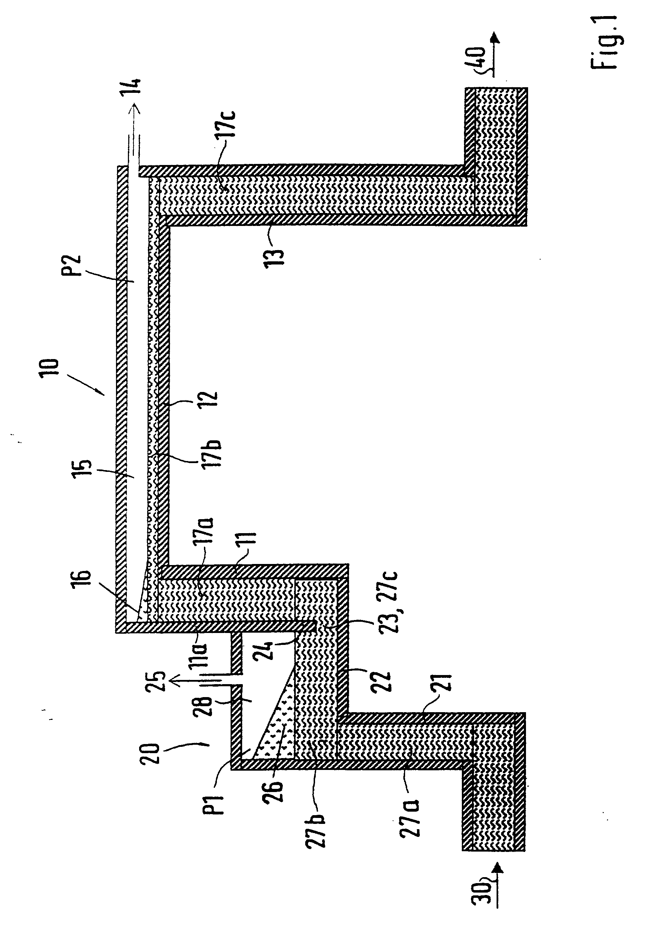

Wie dem Schnitt nach Fig. 1 zu entnehmen ist, gelangt die Glasschmelze aus einem Eingangs-Becken 30 in die Vorrichtung zur Durchführung des erfindungsgemäßen Verfahrens. Der Glasfluss 27a gelangt über ein vertikales Eingangs-Steigrohr 21 in eine erste horizontale Läuterbank 22. Die über dem Glasfluss 27b der Läuterbank 22 gebildete Vakuumkammer 28 weist einen Druck P1 auf, der von einer Vakuumpumpe 25 erzeugt wird. Dieser Druck P1 liegt etwa 100 mbar unterhalb dem zur Schaumbildung führenden Unterdruck gegenüber dem atmosphärischen Druck und liegt im Bereich von etwa 600 bis 300 mbar. Dies führt zu einem großen Schaumvolumen 26, vorzugsweise über dem Eingangs-Steigrohr 21. Die erste Läuterbank 22 geht in ein vertikales Zwischen-Steigrohr 11 einer zweiten Läuterbank 12 über. Dabei ragt die in Strömungsrichtung vordere Wand 11a des Zwischen-Steigrohres 11 teilweise in den Glasfluss 27b, der in'das Zwischen-Steigrohr 11 übergeht. In dem Zwischen-Steigrohr 11 fließt der bereits stark geläuterte Glasfluss 17a zur zweiten Läuterbank 12. Über dem Zwischen-Steigrohr 11 tritt wieder Schaumbildung auf, jedoch ein wesentlich kleineres Schaumvolumen 16.

In der zweiten horizontalen Läuterbank 12 herrscht über der Oberfläche in der Vakuumkammer 15 ein Druck P2, der noch weiter reduziert und von der Vakuumpumpe 14 erzeugt wird. Am Ende der zweiten Läuterbank 12 können in gleicher Weise über Zwischen-Steigrohre weitere Läuterbänke angekoppelt werden. In vielen Fällen reicht jedoch eine zweistufige Vorrichtung, wie im gezeigten Ausführungsbeispiel, aus, um eine ausgezeichnete Läuterung der Glasschmelze zu erreichen. Aus der letzten Läuterbank 12 fließt dann der geläuterte Glasfluss 17c über ein Fallrohr 13 in ein Ausgangs-Becken 40 zur Weiterverarbeitung ab. Der Druck P2 wird in der Endstufe mit etwa 300 bis 30 mbar gewählt.

Bei einem Ausführungsbeispiel mit mehr als zwei Stufen kann der Druck stufig abgebaut werden, wobei in der ersten Stufe ein möglichst großes Schaumvolumen erreicht werden soll und in den folgenden Stufen die Läuterung verbessert und ein Verschleppen von Schaum oder Schaumrelikten in das die Vorrichtung abschließende Fallrohr verhindert werden soll.

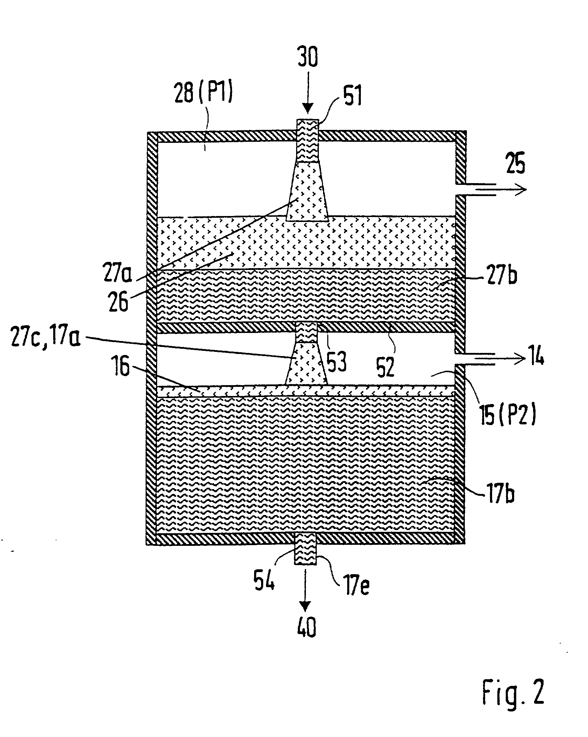

Fig. 2 zeigt ein Ausführungsbeispiel mit einem zwei Vakuumkammern 28 und 15 umfassenden Mehrkammergehäuse 50. Die Vakuumkammern 28 und 15 sind vertikal übereinander angeordnet. Die Glasschmelze wird als Glasfluss 27a aus dem Eingangs-Becken 30 der oberen Vakuumkammer 28 über einen Deckeneinlass 51 zugeführt. Die Vakuumpumpe 25 sorgt für den Druck P1 über dem Glasfluss 27b in der Vakuumkammer 28. Der darin erzeugte Schaum hat ein großes Schaumvolumen 26. Über einen Bodenauslass 53 im Boden 52 der Vakuumkammer 28 gelangt der vorgeläuterte Glasfluss 27c als zugeführter Glasfluss 17a in die untere Vakuumkammer 15, in der der von der Vakuumpumpe 14 erzeugte, reduzierte Druck P2 herrscht. Durch den Bodenauslass 54 der unteren Vakuumkammer 15 gelangt die geläuterte Glasschmelze in das Ausgangs-Becken 40 zur Weiterverarbeitung.

Auch bei dieser Art der Vorrichtung werden die Funktionen Schaumbildung und Verhinderung des Verschleppens von Schaum oder Schaumrelikten in das Produkt auf die in Reihe durchflossenen Vakuumkammern 28 und 15 verteilt und so die Läuterung verbessert.

Selbstverständlich lässt sich das Mehrkammergehäuse 50 auch mit mehr als zwei Vakuumkammern 28 und 15 realisieren. Die Läuterbänke 22 und 15 und die Vakuumkammern 28 und 15 sind zu einer Baueinheit vereinigt.

## Patentansprüche

1. Verfahren zur Läuterung einer Glasschmelze mittels eines über der Oberfläche eines Glasflusses erzeugten Vakuums,
**dadurch gekennzeichnet,**
**dass** der Glasfluss (27b, 17b) nacheinander durch mehrere Vakuumkammern (28, 15) geleitet wird und
**dass** der Druck (P1, P2) in den aufeinander folgenden Vakuumkammern (28, 15) gegenüber dem atmosphärischen Druck mehr und mehr reduziert wird.

2. Verfahren nach Anspruch 1,
**dadurch gekennzeichnet,**
**dass** jeder Vakuumkammer (28, 15) eine individuelle Vakuumpumpe (25, 14) zugeordnet wird.

3. Verfahren nach Anspruch 1 oder 2,
**dadurch gekennzeichnet,**
**dass** der Glasfluss (27b, 17b) über zwei Vakuumkammern (28, 15) geleitet wird, wobei der Druck (P1) in der ersten Vakuumkammer (28) im Bereich 600 bis 300 mbar und der Druck (P2) in der zweiten Vakuumkammer (15) im Bereich 300 bis 30 mbar gewählt wird.

4. Vorrichtung zur Durchführung des Verfahrens nach einem der Ansprüche 1 bis 3,
**dadurch gekennzeichnet,**
**dass** die Vakuumkammern (28, 15) als horizontale Läuterbank (22,12) ausgebildet sind, wobei der ersten Vakuumkammer (28) der Glasfluss (27a) aus einem Eingangs-Becken (30) über ein Eingangs-Steigrohr (21) zuführbar ist,
**dass** die jeweils folgende Vakuumkammer (15) über ein an das Ende der vorhergehenden Läuterbank (28) anschließendes Zwischen-Steigrohr (11) mit dem ankommenden Glasfluss (17a) versorgt ist und
**dass** die letzte Vakuumkammer (15) den Glasfluss (17c) über ein Fallrohr (13) einem Ausgangs-Becken (40) zuführt.

5. Vorrichtung nach Anspruch 4,
**dadurch gekennzeichnet,**
**dass** die in Strömungsrichtung des Glasflusses (27b) vordere Wand (11a) des Zwischen-Steigrohrs (11) zu einer nachfolgenden Vakuumkammer (15) teilweise in den Glasfluss (27c) der vorangehenden Läuterbank (22) ragt.

6. Vorrichtung zur Durchführung des Verfahrens nach einem der Ansprüche 1 bis 3,
**dadurch gekennzeichnet,**
**dass** die Vakuumkammern (28, 15) in einem Mehrkammergehäuse (50) vertikal übereinander angeordnet sind,
**dass** der Glasfluss (27b) über einen Deckeneinlass (41) der obersten Vakuumkammer (28) zuführbar ist und über einen Bodenauslass (53) in die nachfolgende Vakuumkammer (15) eintritt,
**dass** der geläuterte Glasfluss (17c) über einen Bodenauslass (54) der untersten Vakuumkammer (15) austritt und
**dass** jede Vakuumkammer (28, 15) über dem aufgenommenen Glasfluss (27b, 17b) mit einer individuellen Vakuumpumpe (25, 14) verbunden ist.

7. Vorrichtung nach Anspruch 6,
**dadurch gekennzeichnet,**
**dass** die Vakuumkammern (28, 15) in den Seitenwänden des Mehrkammergehäuses (50) mit Anschlussöffnungen für die Vakuumpumpen (25, 14) versehen sind.

8. Vorrichtung nach einem der Ansprüche 4 bis 7,
**dadurch gekennzeichnet,**
**dass** die Vakuumkammern (28, 15) zu einer Baueinheit zusammengefasst sind.
